(19) Europäisches Patentamt
European Patent Office
Office européen des brevets

(11) EP 4 439 470 A1

(12) EUROPEAN PATENT APPLICATION

(43) Date of publication:
**02.10.2024 Bulletin 2024/40**

(21) Application number: **24166438.2**

(22) Date of filing: **26.03.2024**

(51) International Patent Classification (IPC):
***G06T 13/40*** *(2011.01)* ***G06T 19/20*** *(2011.01)*
***G06T 15/04*** *(2011.01)*

(52) Cooperative Patent Classification (CPC):
**G06T 13/40; G06T 15/04; G06T 19/20;**
G06T 2219/2021

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **27.03.2023 KR 20230039976 U**
**15.12.2023 KR 20230183473 U**

(71) Applicant: **CLO Virtual Fashion Inc.**
**Seoul 06236 (KR)**

(72) Inventors:
- **JU, Eun Jung**
  **06236 Seoul (KR)**
- **Lee, Yongwoo**
  **06236 Seoul (KR)**

(74) Representative: **Gill Jennings & Every LLP**
**The Broadgate Tower**
**20 Primrose Street**
**London EC2A 2ES (GB)**

(54) **METHOD AND APPARATUS FOR SIMULATING 3D AVATAR**

(57) Embodiments relate to a method and device for simulating a three-dimensional (3D) avatar. The device may obtain image data including a first face mesh and an operator converting a first reference face mesh into a second reference face mesh; generate a second conversion face mesh using the first face mesh, the first reference face mesh, and the operator; generate a second face mesh using the second conversion face mesh and the second reference face mesh; and apply the second face mesh to the 3D avatar.

Start
Obtain image data including first face mesh and operator converting first reference face mesh into second reference face mesh
101
Generate second conversion face mesh using first face mesh, first reference face mesh, and operator
102
Generate second face mesh using second conversion face mesh and second reference face mesh
103
Apply second face mesh to 3D avatar
104
End

FIG. 1A



Processed by Luminess, 75001 PARIS (FR)

(Cont. next page)

Start
Obtain first UV map of first texture map
111
Calculate second UV coordinates based on barycentric coordinates of first UV coordinates of first UV map
112
Generate second UV map corresponding to second face mesh based on second UV coordinates
113
Generate second texture map based on second UV map
114
End

FIG. 1B

## Description

CROSS-REFERENCE TO RELATED APPLICATIONS

This application claims the benefit under 35 U.S.C. §119(a) of Republic of Korea Patent Application No. 10-2023-0039976 filed on March 27, 2023, and Republic of Korea Patent Application No. 10-2023-0183473 filed on December 15, 2023, the entire disclosures of which are incorporated herein by reference for all purposes.

BACKGROUND

1. Field

Embodiments described herein relate to a method and apparatus for simulating a three-dimensional (3D) avatar.

2. Description of Related Art

For a three-dimensional (3D) simulation of an avatar, various factors including, for example, the physical properties of the skin of the avatar, gravity, and the body shape and pose of the avatar may need to be considered. The 3D simulation may represent the avatar in a 3D space, but a user experience of changing the pose of the avatar to be provided may vary depending on a mesh that represents the avatar.

In addition, a mesh may be applied to the face of the avatar in addition to the body of the avatar to generate a face with a changed facial expression or a different face and provide faces that are changed in various ways.

SUMMARY

Embodiments relate to a three-dimensional (3D) avatar simulation method including: obtaining image data including a first face mesh and an operator converting a first reference face mesh into a second reference face mesh; generating a second conversion face mesh using the first face mesh, the first reference face mesh, and the operator; generating a second face mesh using the second conversion face mesh and the second reference face mesh; and applying the second face mesh to a 3D avatar.

In one or more embodiments, the second face mesh and the second reference face mesh may each be a face mesh for simulating the 3D avatar.

In one or more embodiments, the operator may include a function that optimizes a topology of the first face mesh to a topology of the second face mesh, based on a mapping function that is based on barycentric coordinates of a 3D position of the first reference face mesh and a 3D position of the second reference face mesh.

In one or more embodiments, the generating of the second conversion face mesh may include applying a position difference between the first face mesh and the first reference face mesh to the operator.

In one or more embodiments, the 3D avatar simulation method may further include: generating a second texture map of the second face mesh based on a first texture map of the first face mesh; and applying the second texture map to the 3D avatar.

In one or more embodiments, the generating of the second texture map may include: obtaining a first UV map of the first texture map; calculating second UV coordinates based on barycentric coordinates of first UV coordinates of the first UV map; generating a second UV map corresponding to the second face mesh based on the second UV coordinates; and generating the second texture map based on the second UV map.

In one or more embodiments, the 3D avatar simulation method may further include applying masking information of the image data to the 3D avatar based on the second UV map.

In one or more embodiments, the 3D avatar simulation method may further include applying skin tone information included in the image data to the 3D avatar.

In one or more embodiments, the applying to the 3D avatar may include providing a 3D avatar customizing function to the 3D avatar to which the second face mesh is applied.

In one or more embodiments, the image data may include a 3D face mesh and texture map extracted from at least one of a two-dimensional (2D) image, a 3D image, or a customized 3D image.

Embodiments also relate to a 3D avatar simulation device configured to: obtain image data including a first face mesh and an operator converting a first reference face mesh into a second reference face mesh; generate a second conversion face mesh using the first face mesh, the first reference face mesh, and the operator; generate a second face mesh using the second conversion face mesh and the second reference face mesh; and apply the second face mesh to a 3D avatar.

Embodiments also relate to an electronic device including: a display configured to simulate a 3D avatar; a memory; and a processor. The processor may be configured to: obtain image data including a first face mesh and an operator converting a first reference face mesh into a second reference face mesh; generate a second conversion face mesh using the first face mesh, the first reference face mesh, and the operator; generate a second face mesh using the second conversion face mesh and the second reference face mesh; and apply the second face mesh to a 3D avatar.

Embodiments also relate to a server including: a processor configured to generate a second conversion face mesh using a first face mesh, a first reference face mesh, and an operator, in response to a request for generation of a second face mesh being received from a simulation device, and generate the second face mesh using the second conversion face mesh and a second reference face mesh; a communicator configured to receive the request for the generation of the second face mesh, transmit the operator, and transmit the second face mesh generated by the processor; and a memory. The operator may convert image data including the first face mesh and the first reference face mesh into the second reference face mesh.

Embodiments also relate to a simulation device including: a display configured to simulate a 3D avatar; a memory; a communicator configured to receive image data including a first face mesh, transmit a request for generation of a second face mesh to a server, and receive the generated second face mesh, based on a user input; and a processor configured to apply the second face mesh to the 3D avatar. The server may be configured to: in response to the request for the generation of the second face mesh being received from the simulation device, generate a second conversion face mesh using the first face mesh, a first reference face mesh, and an operator; generate the second face mesh using the second conversion face mesh and a second reference face mesh; and transmit the second face mesh to the simulation device. The operator may convert the image data including the first face mesh and the first reference face mesh into the second reference face mesh.

## BRIEF DESCRIPTION OF THE DRAWINGS

These and/or other aspects, features, and advantages of the present disclosure will become apparent and more readily appreciated from the following description of embodiments, taken in conjunction with the accompanying drawings of which:

FIGS. 1A and 1B are flowcharts illustrating operations performed by a simulation device, according to an embodiment;
FIG. 2 is a block diagram illustrating operations performed by a simulation device, according to an embodiment;
FIGS. 3, 4, and 5 are diagrams illustrating examples of a method of generating image data, according to an embodiment;
FIG. 6 is a diagram illustrating a face mesh conversion of a simulation device, according to an embodiment;
FIG. 7 is a diagram illustrating an operator of a simulation device, according to an embodiment;
FIG. 8 is a schematic diagram illustrating a face generation interface, according to an embodiment;
FIG. 9 is a diagram illustrating a method of mapping a texture map performed by a simulation device, according to an embodiment;
FIG. 10 is a diagram illustrating a method of applying a skin tone to a three-dimensional (3D) avatar performed by a simulation device, according to an embodiment; and
FIG. 11 is a block diagram illustrating an electronic device, according to various embodiments.

## DETAILED DESCRIPTION

The following structural or functional descriptions of embodiments are merely intended for the purpose of describing the embodiments, and the embodiments may be implemented in various forms. The embodiments are not intended to be limited, but it is intended that various modifications, equivalents, and alternatives are also covered within the scope of the claims.

Although terms of "first" or "second" are used to explain various components, the components are not limited to the terms. These terms should be used only to distinguish one component from another component. For example, a "first" component may be referred to as a "second" component, or similarly, the "second" component may be referred to as the "first" component within the scope of the right according to the concept of the present disclosure.

It should be noted that if it is described that one component is "connected," "coupled," or "joined" to another component, a third component may be "connected," "coupled," and "joined" between the first and second components, although the first component may be directly connected, coupled, or joined to the second component. On the contrary, it should be noted that if it is described that one component is "directly connected," "directly coupled," or "directly joined" to another component, a third component may be absent. Expressions describing a relationship between components, for example, "between," "directly between," or "directly neighboring," etc., should be interpreted in a similar way.

As used herein, the singular forms "a," "an," and "the" are intended to include the plural forms as well, unless the context clearly indicates otherwise. As used herein, the terms "include," "comprise," and "have" specify the presence of stated features, numbers, operations, elements, components, and/or combinations thereof, but do not preclude the presence or addition of one or more other features, numbers, operations, elements, components, and/or combinations thereof.

Unless otherwise defined, all terms used herein including technical or scientific terms have the same meanings as those generally understood consistent with and after an understanding of the present disclosure. Terms, such as those defined in commonly used dictionaries, should be construed to have meanings matching with contextual meanings in the relevant art and the present disclosure, and are not to be construed as an ideal or excessively formal meaning unless otherwise defined herein.

Hereinafter, the embodiments will be described in detail with reference to the accompanying drawings. When describing the embodiments with reference to the accompanying drawings, like reference numerals refer to like components and a repeated description related thereto will be omitted.

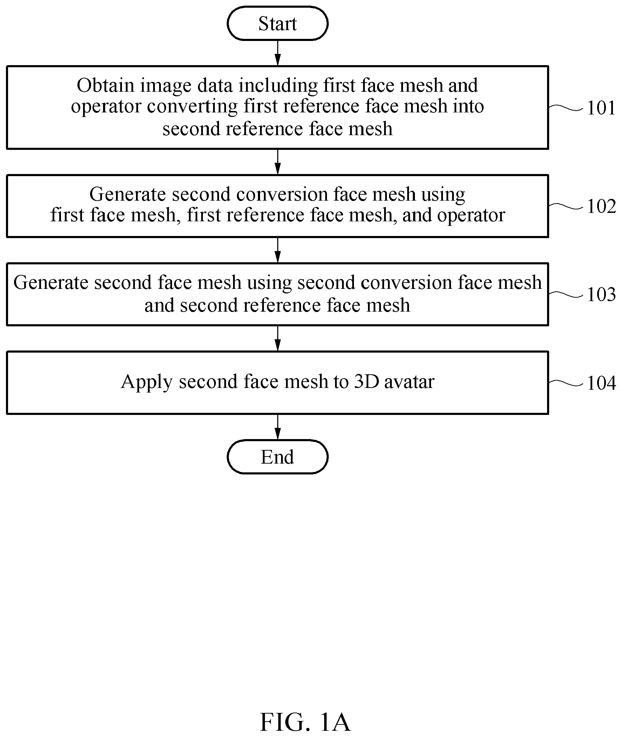

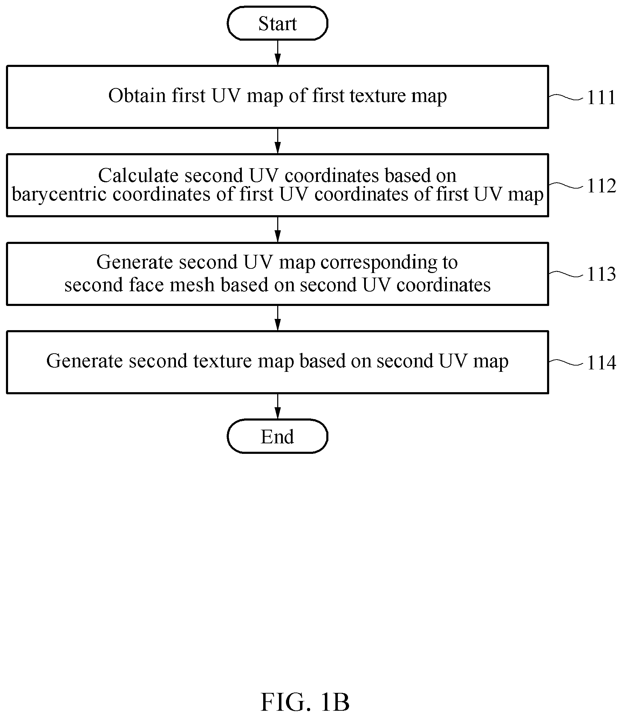

FIGS. 1A and 1B are flowcharts illustrating operations performed by a simulation device, according to an embodiment.

Operations described below may be performed in an order and manner shown in FIGS. 1A and 1B, but some of the operations may be performed in different orders or omitted without departing from the scope of embodiments described herein. In addition, some of the operations shown in FIGS. 1A and 1B may be performed in parallel or simultaneously.

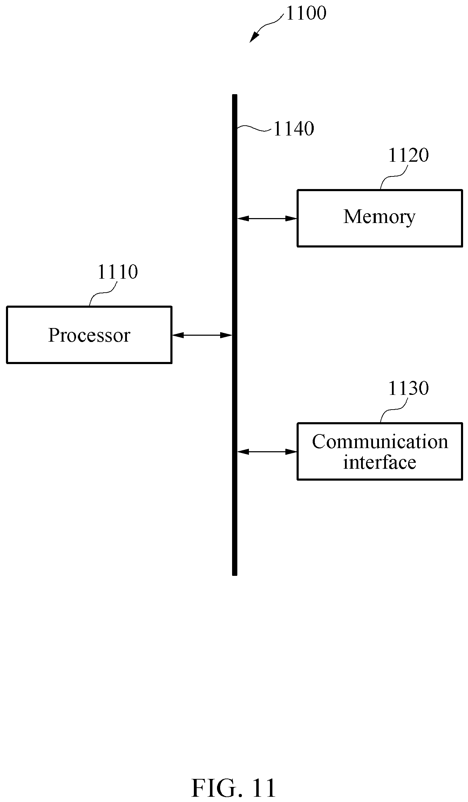

For the convenience of description, operations 101 to 104 will be described as performed by a simulation device shown in FIG. 11. However, these operations (e.g., operations 101 to 104 and operations 111 to 114) may be performed through any other suitable electronic device and used in any suitable system.

The simulation device may be implemented as a product of various types, such as, for example, a personal computer (PC), a laptop computer, a tablet computer, a smartphone, a wearable device, a cloud computer, software as a service (SaaS), or the like.

The simulation device, which is a device configured to install and execute serverrelated applications thereon, may provide an interface to a user. The interface may be provided by the simulation device itself. For example, it may be provided by an operating system (OS) of the simulation device or by an application installed on the simulation device. The interface may also be provided by a server, and the simulation device may simply receive and display the interface provided by the server.

The server may be connected to the simulation device through a network. The network may include the Internet, one or more local area networks (LANs), wide area networks (WANs), cellular networks, mobile networks, other types of networks, or a combination of these networks.

Although not shown in the accompanying drawings, a three-dimensional (3D) avatar, a 3D garment, and a two-dimensional (2D) pattern may each be formed with a mesh including a plurality of polygons. Depending on embodiments, a mesh may be modeled in various ways. For example, vertices of polygons included in a mesh may be points with mass (i.e., point masses), and sides of a polygon may be represented as springs having elasticity that connects the masses. According to an embodiment, a 3D garment may be modeled by, for example, a mass-spring model. In this case, the springs may have respective resistance values with respect to, for example, stretching, shearing, and bending, based on the physical properties of a fabric used.

Alternatively, a mesh may be modeled with a strain model. In this case, polygons included in a mesh may be modeled as, for example, triangles, or as polygons having four or more sides. In some cases, for modeling a 3D volume, a mesh may be modeled as a 3D polyhedron.

Each of vertices of polygon(s) included in a mesh may move according to an external force such as gravity and an internal force due to stretching, shearing, and bending. By calculating the external force and the internal force to obtain a force applied to each vertex, a displacement and speed of a movement of each vertex may be determined. Using the collective movement of vertices of polygon(s) included in a mesh at each time step, movements of an avatar and a garment may be simulated. For example, draping a garment including polygonal meshes over a 3D avatar including polygonal meshes may implement a natural-looking 3D virtual garment based on the laws of physics. Each of vertices of polygon(s) included in a mesh may move according to an action of an external force such as gravity and an internal force from stretching, shearing, and bending. In this case, by calculating the external force and the internal force, a force to be applied to each vertex may be calculated, and a displacement and a speed of a movement of each vertex may be obtained. In addition, a movement of vertices of polygons of a mesh at each time step may be used to simulate a movement of a virtual garment. Draping a 2D pattern formed with polygonal meshes over a 3D avatar may implement a natural-looking 3D virtual garment based on the laws of physics.

Hereinafter, a method of performing a simulation by applying an external face image to a 3D avatar will be described in detail. In the following description, it is assumed that a topology of a face mesh obtained from the outside and a topology of a face mesh of a 3D avatar included in the simulation device are different.

A topology, which is a mathematical method that recognizes a position of input data as coordinate values and stores information between pieces of data as relative positions, may define the direction of lines, a relationship between features, connectivity, contiguity, and areas. By defining relationships between various geometric structures, it may define the connectivity of each point according to the direction of lines, relative positional relationships between polygons, point-to-point and point-to-line distances, or the configuration of the lines.

Referring to FIG. 1A, the simulation device may perform a simulation by optimizing a face mesh obtained from the outside to a face mesh of a 3D avatar included in the simulation device and converting a face of the avatar.

According to an embodiment, in operation 101, the simulation device may obtain image data including a first face mesh and an operator converting a first reference face mesh into a second reference face mesh. The image data may include a 3D face mesh and texture map extracted from at least one of a 2D image, a 3D image, or a customized 3D image. In this case, the simulation device may process and obtain an operator that optimizes mesh conversion or may receive a predetermined operator from a server.

According to an embodiment, the operator may include a function that optimizes a topology of the first face mesh to a topology of a second face mesh, based on a mapping function that is based on barycentric coordinates of a 3D position of the first reference face mesh and a 3D position of the second reference face mesh.

It is assumed that a first face mesh Q1 is a face mesh among external face meshes Q and a second face mesh P1 is a face mesh among face meshes P of a 3D avatar of the simulation device. The face meshes may be expressed as Equation 1.

[Equation 1]

$$P = \{P1, P2, P3, \ldots\} \quad Q = \{Q1, Q2, Q3, \ldots\}$$

A first reference face mesh Q0 may have the same topology as the first face mesh Q1 but have a different shape (e.g., facial expression) of face mesh. For example, the first reference face mesh Q0 may be a face mesh with an expressionless face, and the first face mesh Q1 may be a face mesh with a smiling face.

Likewise, a second reference face mesh P0 may have the same topology as the second face mesh P1 but have a different shape of face mesh. For example, the second reference face mesh P0 may be a face mesh with an expressionless face, and the second face mesh P1 may be a face mesh with a smiling face.

The operator may be used to map the first reference face mesh Q0 to the second reference face mesh P0 while maintaining the shape. Since the external avatar face meshes Q and the face meshes P of the 3D avatar have different numbers of points, the operator may include a function for mapping the positions of vertices. Such a mapping function B may be expressed as in Equation 2 below.

[Equation 2]

$$\{q_0 | q_1, q_2, q_3, \ldots q_n\} \in Q0, \qquad \{p_0 | p_1, p_2, p_3, \ldots, p_m\} \in P0$$

$$p_i = B(q) = \Sigma w_j q_j$$

$$B: Q0 \rightarrow P0$$

$$P0 = B(Q0)$$

In Equation 2, $q_0$ denotes vertices included in the first reference face mesh Q0, $p_0$ denotes vertices included in the second reference face mesh P0, and the mapping function B denotes a function that converts the vertices based on barycentric coordinates. In this case, pi = B(q) = $\sum w_j q_j$ is an equation that expresses the mapping function B for converting vertices included in a face mesh. In this case, $w_j$ (j = 0, 1, 2, ...) denotes a barycentric weight, and may be defined as $\sum w_j$, = 1. Accordingly, the operator may convert the first reference face mesh Q0 into the second reference face mesh P0 with a different topology using the mapping function B to convert only a face mesh while maintaining a face shape (e.g., facial expression).

According to an embodiment, in operation 102, the simulation device may generate a second conversion face mesh B(ΔQ) using the first face mesh Q1, the first reference face mesh Q0, and the operator.

According to an embodiment, the simulation device may generate the second conversion face mesh B(ΔQ) by applying a position difference between the first face mesh Q1 and the first reference face mesh Q0 to the operator.

According to an embodiment, for the same topology of face meshes, one-to-one mapping between vertices may be performed, and thus the simulation device may set a point at a specific index as a pivot and calculate a position difference of all points based on the point at the index to obtain a displacement between meshes. That is, a mesh displacement in the same topology may be referred to as a position difference of each vertex. Equation 3 and Equation 4 below may express a position difference between the first reference face mesh Q0 and the first face mesh Q1 and a position difference between the second reference face mesh P0 and the second face mesh P1.

[Equation 3]

$$\Delta Q = Q1 - Q0, \qquad Q1 = Q0 + \Delta Q$$

[Equation 4]

$$\Delta P = P1 - P0, \qquad P1 = P0 + \Delta P$$

The mapping function B may be a linear function, and the second conversion face mesh B(ΔQ) may thus be expressed as Equation 5 below.

[Equation 5]

$$B(Q1) = B(Q0 + \Delta Q) = B(Q0) + B(\Delta Q)$$

$$p_0 = B(q_0) = \Sigma w_j q_{j0}$$

$$B(\Delta Q) = B(Q1) - B(Q0) = \{p_1 | p_{1i} = \Sigma w_j q_{j1}\} - \{p_0 | p_{0i} = \Sigma w_j q_{j0}\}$$

$$\{p_1 - p_0 | (p_1 - p_0)_i = \Sigma w_j (q_{j1} - q_{j0})\} = \Sigma w_j \Delta q_j$$

According to an embodiment, in operation 103, the simulation device may generate the second face mesh P1 using the second conversion face mesh B(ΔQ) and the second reference face mesh P0. The second face mesh P1 and the second reference face mesh P0 may each be a face mesh for simulating the 3D avatar.

While an existing B(Q0) corresponds to barycentric coordinate-based mapping for a 3D position of points in Q0, the second conversion face mesh B(ΔQ) may correspond to barycentric coordinate-based mapping for a 3D gradient vector of the points in Q0. Therefore, since the second reference face mesh P0 and the second face mesh P1 have the same topology, a position difference ⊿P between the second reference face mesh P0 and the second face mesh P1 and the second face mesh P1 may be expressed as Equation 6 below.

[Equation 6]

$$\Delta P = \Delta(\Sigma w_j q_j) = \Sigma w_j \Delta q_j = B(\Delta Q)$$

$$P1 = P0 + \Delta P = B(Q0) + B(\Delta Q)$$

According to an embodiment, in operation 104, the simulation device may apply the second face mesh P1 to the 3D avatar.

Operations 101 to 104 have been described above based on the first face mesh Q1 and the second face mesh P1. The simulation device may perform operations 101 to 104 described above on Q2, Q3, Q4, ... and P2, P3, P4, ..., sequentially or simultaneously. That is, when obtaining the operator or receiving the operator from the server, the simulation device may convert external face meshes Q into face meshes P of a 3D avatar of the simulation device. In this case, the simulation device may receive an operator including a predetermined mapping function B optimized for a topology of the external face meshes Q from the server or calculate the mapping function B optimized for the topology of the external face meshes Q according to a user input.

Referring to FIG. 1B, the simulation device may convert a texture map included in image data to be mapped to a texture map of a 3D avatar of the simulation device.

In general, a portion that represents a visual feature of a skin in a 3D avatar may be a texture. A texture map may refer to a map representing the texture and color of a face on a 3D face mesh and may include a portion that represents the color and a normal map that represents irregularities.

A UV map may refer to a normal map that flattens a texture map of a 3D face mesh to be in 2D for easier modification. The UV map may also refer to a map including UV coordinates that reflect thereon coordinates of the eyes, nose, mouth, and the like.

A texture map of external face meshes Q may be different from a texture map of face meshes P of a 3D avatar of the simulation device. Therefore, while converting a face mesh, the simulation device may need to convert a texture map such that it is to be mapped to the face mesh to be converted.

According to an embodiment, the simulation device may generate a second texture map of a second face mesh based on a first texture map of a first face mesh.

According to an embodiment, in operation 111, the simulation device may obtain a first UV map of the first texture map. For example, since image data includes information about a 3D face mesh and a texture map, the simulation device may obtain the first UV map from the first texture map.

According to an embodiment, in operation 112, the simulation device may calculate second UV coordinates based on barycentric coordinates of first UV coordinates of the first UV map. For example, since the first UV coordinates are displayed in a 2D UV coordinate system, the simulation device may calculate the second UV coordinates using the barycentric coordinates in a similar way to convert a first reference face mesh into a second reference face mesh.

According to an embodiment, in operation 113, the simulation device may generate a second UV map corresponding to a second face mesh based on the second UV coordinates. Unlike the first UV coordinates included in the first UV map, in the second UV map, the eyes, nose, and mouth may need to be positioned to fit in the face mesh of the 3D avatar. Accordingly, the simulation device may generate the second UV map such that the positions of the eyes, nose, and mouth disposed on the face mesh of the existing 3D avatar are to be disposed at the positions of the eyes, nose, and mouth on the second face mesh P obtained through the conversion.

According to an embodiment, in operation 114, the simulation device may generate a second texture map based on the second UV map. For example, when the positions of the eyes, nose, and mouth are re-arranged according to the second UV map, the simulation device may generate the second texture map by combining a texture suitable for the eyes, nose, and mouth with the second UV map.

According to an embodiment, the simulation device may apply the second texture map generated according to operations 111 to 114 described above to the 3D avatar.

According to an embodiment, the simulation device may apply masking information of the image data to the 3D avatar based on the second UV map. Since the first UV map, which is an existing UV map, does not include the masking information, the simulation device may apply, to the 3D avatar, the second UV map using the masking information included in the image data. Applying the masking information to the 3D avatar may enable a modification in response to a user input making selections for the eyes, nose, or mouth of the face of the 3D avatar.

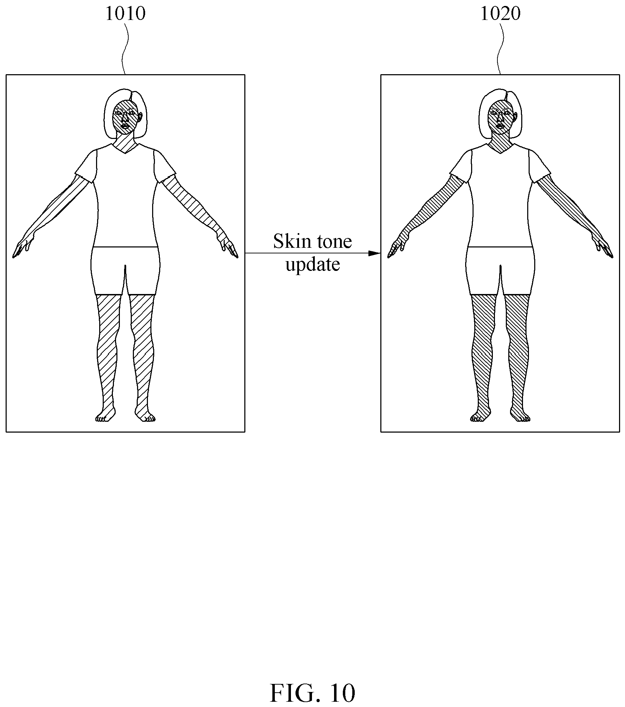

According to an embodiment, the simulation device may apply skin tone information included in the image data to the 3D avatar. A method of applying a skin tone will be described in detail below with reference to FIG. 10.

According to an embodiment, the simulation device may provide a 3D avatar customizing function to the 3D avatar to which the second face mesh is applied. For example, the simulation device may provide a function of customizing (e.g., adjusting the hairstyle or adjusting the size and shape of the eyes, nose, mouth, etc.) the face of the 3D avatar of the simulation device, which is one before the external face meshes Q are applied, to the 3D avatar of the simulation device to which the external face meshes Q are converted and applied.

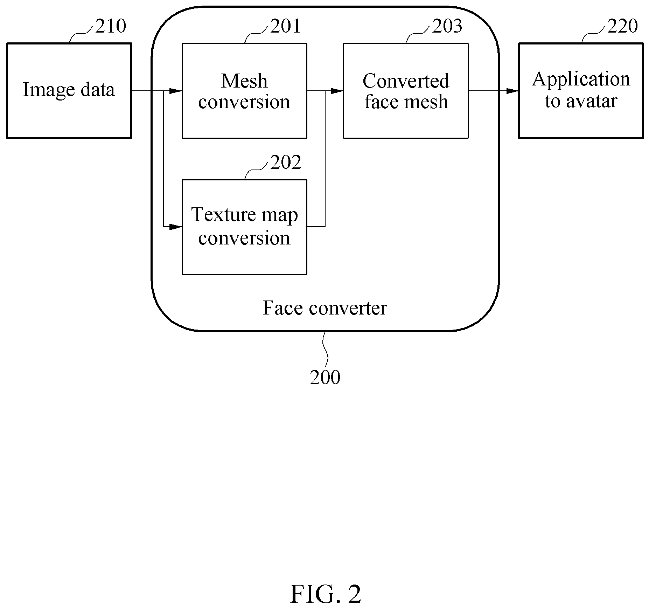

FIG. 2 is a block diagram illustrating operations performed by a simulation device, according to an embodiment. What is described above with reference to FIGS. 1A and 1B may be applied to what is to be described below with reference to FIG. 2, and a repeated description will be omitted.

Referring to FIG. 2, the simulation device may include a face converter 200. Alternatively, the simulation device may be connected to a server including the face converter 200 through a network. According to an embodiment, the simulation device may receive image data 210 and generate a converted face mesh 203 through mesh conversion 201 and texture map conversion 202 in the face converter 200, and may then apply the face mesh 203 to a 3D avatar in step 220.

According to an embodiment, the image data 210 may include a 3D face mesh and texture map extracted from at least one of a 2D image, a 3D image, or a customized 3D image.

According to an embodiment, the simulation device may generate the converted face mesh 203 from the extracted 3D face mesh and texture map using the face converter 200.

The simulation device may be connected to an external server or an external platform through a network. In this case, the simulation device may access the server through the network according to a user input from a user. The server may serve as a service platform that converts a 2D image into a 3D image, provides a 3D face mesh and texture map, or provides 3D avatar simulation. The user may use a simulation service provided by the server through the simulation device. The server may be connected to the simulation device through a network. The network may include, for example, the Internet, one or more LANs, WANs, cellular networks, mobile networks, other types of networks, or a combination of these networks.

For example, in a case in which the simulation device includes the face converter 200, it may receive the image data 210 and apply the face mesh 203 converted in the face converter 200 to the avatar in step 220. When the user generates the image data 210 by extracting their 2D face image as a 3D face mesh and texture map and inputs it as input data to the simulation device, the simulation device may generate the converted face mesh 203 through the face converter 200. Subsequently, the simulation device may output the converted face mesh 203 onto the 3D avatar and simulate it on an interface.

For another example, in a case in which the server includes the face converter 200, the simulation device may receive the image data 210 according to a user input and transmit the image data 210 to the server, and the face converter 200 of the server may display a result of applying the converted face mesh 203 to the avatar in step 220.

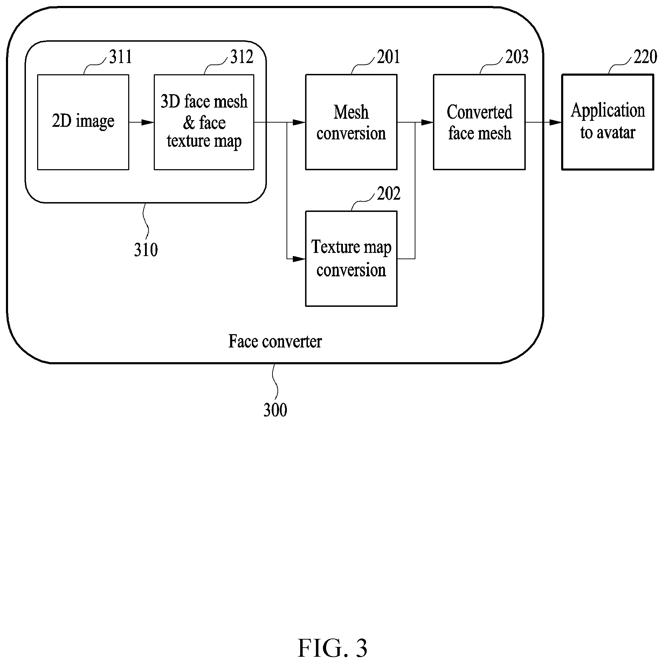

As will be described in detail below with reference to FIGS. 3 to 5, a 3D face mesh and a texture map may be extracted in various ways.

The face converter 200 may perform the mesh conversion 201 through operations 101 to 104 described above with reference to FIG. 1A and perform the texture map conversion 202 through operations 111 to 114 described above with reference to FIG. 1B.

FIGS. 3, 4, and 5 are diagrams illustrating examples of a method of generating image data, according to an embodiment. What is described above with reference to FIGS. 1A, 1B, and 2 may be applied to what is to be described below with reference to FIGS. 3, 4, and 5, and a repeated description will be omitted.

Referring to FIG. 3, according to an embodiment, the simulation device may include, in a face converter 300, a 3D converter 310 configured to receive a 2D image 311 as an input and extract a 3D face mesh and texture map 312 from the 2D image 311. For example, the simulation device may have an application programming interface (API) embedded in the face converter 300 that converts a 2D image into a 3D image. Therefore, when receiving the 2D image 311, the simulation device may extract the 3D face mesh and texture map 312 by the 3D converter 310 and then perform mesh conversion 201 and texture map conversion 202 to generate a converted face mesh 203.

According to an embodiment, the simulation device may have an API embedded in the face converter 300 that converts a prompt into 3D. For example, the prompt may include text. For example, when a separate interface into which an input is made through the simulation device is provided, the prompt may be input according to a set category (e.g. gender, age, ethnicity, adult, etc.). The category may be set in advance and expanded without limit, and accordingly the prompt may also be expanded and input without limit. When receiving such a prompt, the simulation device may extract the 3D face mesh and texture map 312 corresponding to the prompt by the 3D converter 310 and may then perform the mesh conversion 201 and the texture map conversion 202 to generate the converted face mesh 203. The face converter 300 may perform artificial intelligence (AI) face generation.

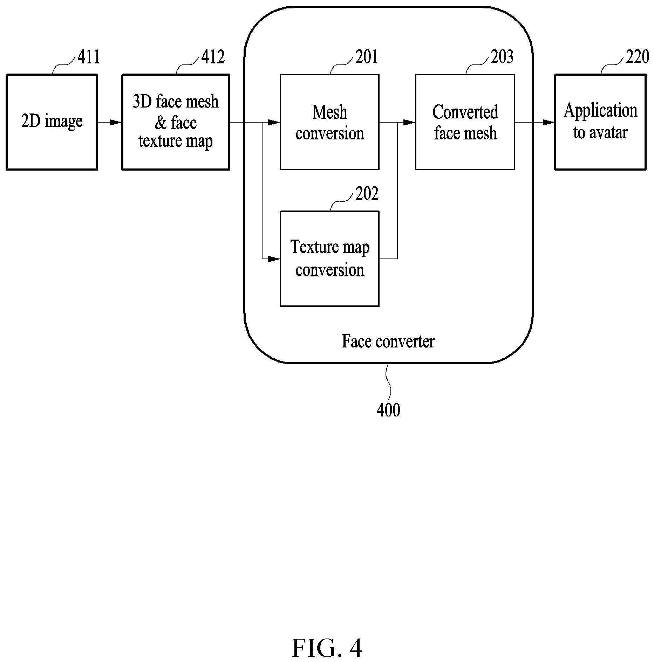

Referring to FIG. 4, according to an embodiment, the simulation device may receive, by a face converter 400, image data that is obtained by receiving a 2D image 411 from the outside and converting it into a 3D face mesh and texture map 412 and may generate a converted face mesh 203. For example, a user may directly input, to the simulation device, the image data obtained by converting their 2D face image 411 (or a 2D image without portrait rights because it does not exist) into the 3D face mesh and texture map 412 on an external platform. For another example, the simulation device may be connected to an external server including a 3D image conversion platform. In this example, when the user inputs their 2D face image 411 (or a 2D image without portrait rights because it does not exist) to the simulation device, the simulation device may transmit the 2D image 411 to the external server. The simulation device may then receive, from the external server, the image data obtained by converting the 2D image 411 into the 3D face mesh and texture map 412.

In this case, the simulation device may transmit the input image data to a server including the face converter 400 to perform mesh conversion 201 and texture map conversion 202. Alternatively, the face converter 400 included in the simulation device itself may perform the mesh conversion 201 and the texture map conversion 202. The simulation device may generate a 3D avatar to which the converted face mesh 203 is applied, based on a user input from the user.

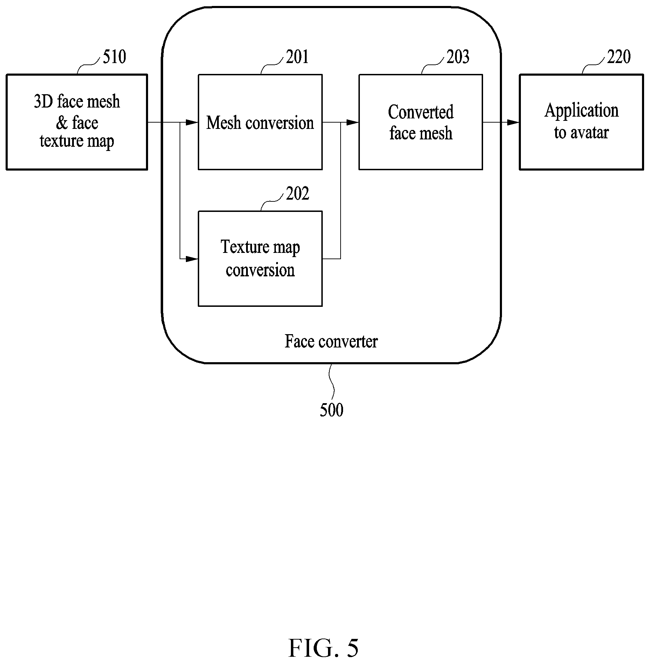

Referring to FIG. 5, according to an embodiment, the simulation device may receive a 3D face mesh and texture map 510 customized by a user as image data and generate a converted face mesh 203. For example, the user may use an external AI face generation platform (e.g. UE5 metahuman, DALL-E, Midjourney, etc.) to generate a 3D face that does not exist in reality. The user may directly input, to the simulation device, 3D face mesh data and texture map data included in the 3D face generated on the external platform. For another example, the simulation device may be connected to an external server including the AI face generation platform. In this case, the simulation device may be connected to the external server to provide an interface of the AI face generation platform. Therefore, when the user generates a 3D face in the simulation device, the simulation device may receive 3D face mesh data and texture map data included in the 3D face from the external server.

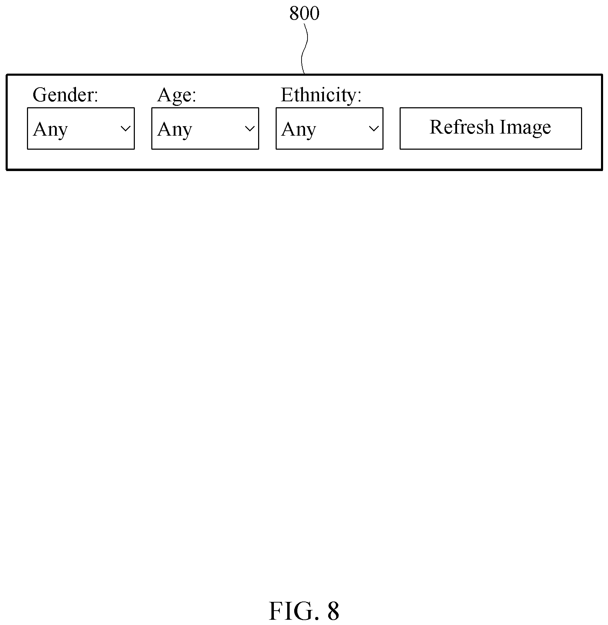

In this case, the simulation device may transmit the input image data to a server including a face converter 500 to perform mesh conversion 201 and texture map conversion 202. Alternatively, the face converter 500 included in the simulation device itself may perform the mesh conversion 201 and the texture map conversion 202. For example, referring to AI face generation 800 shown in FIG. 8, a user input selecting ones in various categories including, for example, gender, age, ethnicity, or the like, may be received and a 3D face may be generated.

According to an embodiment, for the converted face mesh 203 shown in FIGS. 3 to 5, different results may be obtained according to image data input by the user.

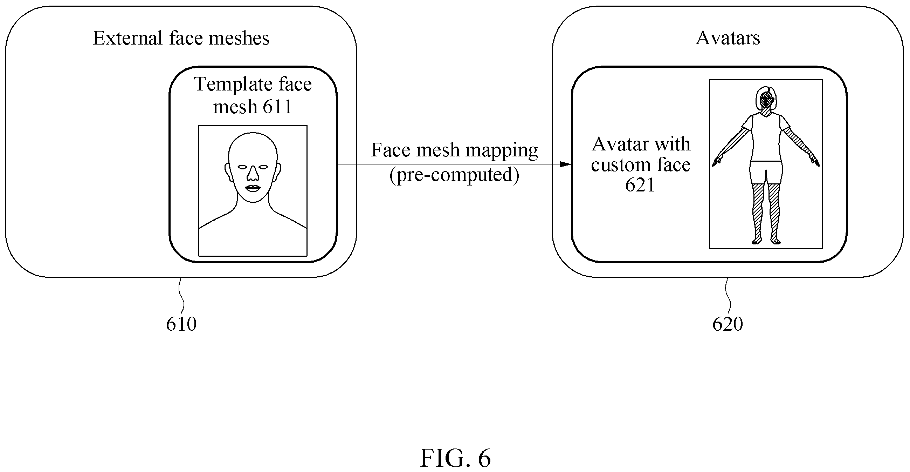

FIG. 6 is a diagram illustrating a face mesh conversion of a simulation device, according to an embodiment. What is described above with reference to FIG. 1A may be applied to what is to be described below with reference to FIG. 6, and a repeated description will be omitted.

According to an embodiment, the simulation device may perform face mesh mapping based on a pre-computed method by receiving external face meshes Q 610 and a template face mesh 611 (e.g., the first reference face mesh Q0 of FIG. 1A) included in the external face meshes Q 610. The simulation device may perform the face mesh mapping to apply a converted face mesh 621 (e.g., the second face mesh P of FIG. 1A) to a 3D avatar 620.

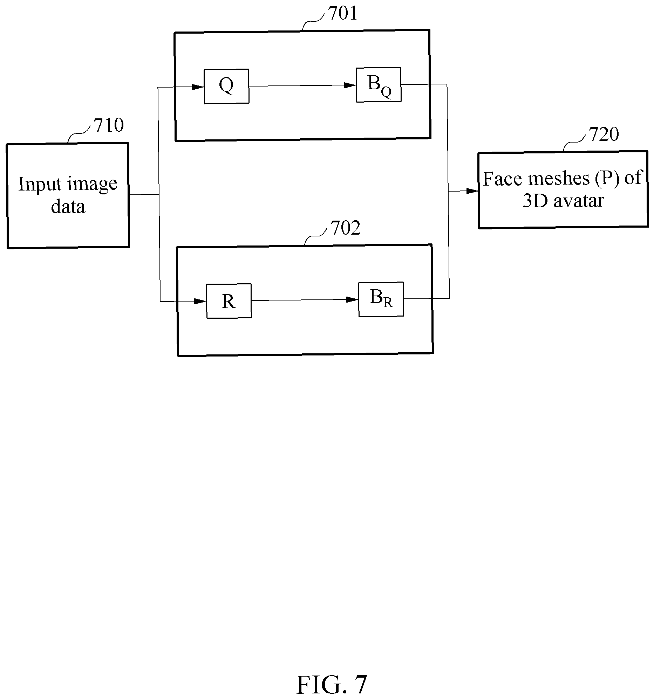

FIG. 7 is a diagram illustrating an operator of a simulation device, according to an embodiment. What is described above with reference to FIGS. 1A and 1B may be applied to what is to be described below with reference to FIG. 7, and a repeated description will be omitted.

According to an embodiment, the simulation device may receive input image data 710 and perform one of first external face mesh conversion 701 and second external face mesh conversion 702 to simulate a 3D avatar 720.

The first external face mesh conversion 710 may relate to what is described above with reference to FIG. 1A. The simulation device may convert first external face meshes (e.g., the external face meshes Q of FIG. 1A) into face meshes P of the 3D avatar 720, using an operator $B_Q$ that converts a first reference face mesh Q0 into a second reference face mesh P0.

The second external face mesh conversion 720 may also relate to what is described above with reference to FIG. 1A. The simulation device may convert face meshes R with a different topology generated through a different platform (e.g., a platform other than a platform on which the simulation device operates) from the first external face mesh conversion 710 into the face meshes P of the 3D avatar 720, using an operator $B_R$.

For example, the operations of the simulation device are not limited to converting only one platform or topology into a topology of a face mesh of a 3D avatar. For example, even when topologies of various face meshes (e.g., Q, R, S, ...) converted by various platforms are different, the simulation device may obtain the face meshes P of the 3D avatar 720 by obtaining an operator (e.g., $B_Q$, $B_R$, $B_S$, ...) determined in advance for each of the topologies or receiving it from a server.

FIG. 8 is a schematic diagram illustrating a face generation interface, according to an embodiment. What is described above with reference to FIG. 5 may be applied to what is to be described below with reference to FIG. 8, and a repeated description will be omitted.

Referring to FIG. 8, AI face generation 800 may generate a 3D face by receiving a user input that selects corresponding ones from various categories such as gender, age, ethnicity, and the like.

For example, when a user inputs "female," "'30," and "Asian" to the interface for inputting gender, age, and ethnicity, the AI face generation 800 may generate a 3D face mesh and texture map to generate a 3D face. The simulation device may receive the generated face mesh and texture map from the AI face generation 800, generate a converted face mesh 203, and apply it to a face mesh of a 3D avatar for simulation.

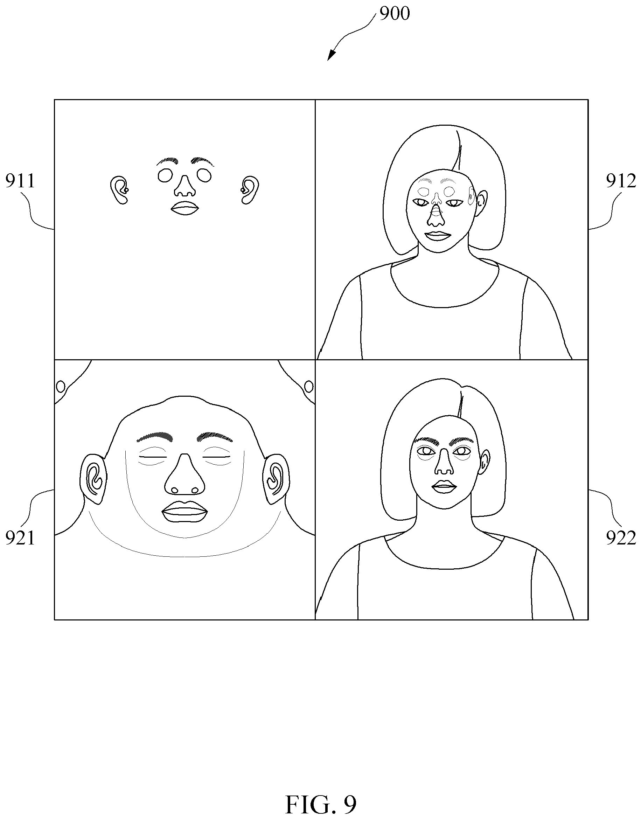

FIG. 9 is a diagram illustrating a method of mapping a texture map performed by a simulation device, according to an embodiment. What is described above with reference to FIGS. 1A and 1B may be applied to what is to be described below with reference to FIG. 9, and a repeated description will be omitted.

When applying a first texture map 911 as it is to a second face mesh without generating a second texture map 921, the simulation device may simulate a first avatar face 912. That is, because a first UV map of a first texture map and a second UV map are different, the positions of the eyes, nose, and mouth may not exactly correspond to the positions of the eyes, nose, and mouth on a face of an existing 3D avatar. Accordingly, the simulation device may need to perform operations 111 to 114 described above to generate the second texture map 921 and apply it to the second face mesh.

When applying the second texture map 921 generated by the simulation device to the second face mesh P, the simulation device may simulate a second avatar face 922. The eyes, nose, and mouth of the second avatar face 922 may be appropriately positioned on the 3D avatar face according to a second UV map that is based on newly calculated second UV coordinates. Accordingly, the simulation device may generate the second texture map 921 and apply it to the 3D avatar to simulate a 3D avatar face of the same or similar shape as an image input by a user.

FIG. 10 is a diagram illustrating a method of applying a skin tone to a 3D avatar performed by a simulation device, according to an embodiment. What is described above with reference to FIGS. 1A and 1B may be applied to what is to be described below with reference to FIG. 10, and a repeated description will be omitted.

A skin tone of external face meshes may not match a skin tone of body meshes of a 3D avatar of the simulation device. In this case, a skin tone received by the simulation device from image data may include only skin tone information of the face meshes. In this case, the simulation device may adjust the skin tone of the body meshes of the 3D avatar to match the skin tone information of the face meshes.

For example, the simulation device may determine whether a skin tone of a face and a skin tone of a body are different in a 3D avatar 1010 in which only a skin tone of a face mesh is changed by the application of a texture map of FIG. 9. When it is determined that the simulation is unnatural because the skin tone of the face and the skin tone of the body are different by more than a predetermined threshold, the simulation device may adjust the skin tone of the body of the 3D avatar such that the skin tone of the face and the skin tone of the body are naturally connected. The simulation device may simulate a 3D avatar 1020 having a skin tone of the body that is changed by the application of the adjusted skin tone of the body to the 3D avatar.

FIG. 11 is a block diagram illustrating an electronic device, according to various embodiments.

FIG. 11 is a block diagram illustrating an electronic device 1100 according to an embodiment. According to an embodiment, the electronic device 1100 may be a server. According to another embodiment, the electronic device 1100 may be a simulation device (e.g., a mobile terminal, a laptop, a desktop, etc.). Referring to FIG. 11, the electronic device 1100 may include a memory 1120, a processor 1110, and a communication interface 1130. The memory 1120, the processor 1110, and the communication interface 1130 may be connected to each other through a communication bus 1140.

The memory 1120 may store various information generated during the processing of the processor 1110 described above. The memory 1120 may also store various data and programs. The memory 1120 may include a volatile memory or a nonvolatile memory. The memory 1120 may have a high-capacity storage medium such as a hard disk to store various data.

The processor 1110 may be a hardware-implemented device having a physically structured circuit to execute desired operations. For example, the desired operations may include code or instructions included in a program. The hardware-implemented device may include, for example, a microprocessor, a central processing unit (CPU), a graphics processing unit (GPU), a processor core, a multi-core processor, a multiprocessor, an application-specific integrated circuit (ASIC), a field-programmable gate array (FPGA), a neural processing unit (NPU), or the like.

The processor 1110 may execute the program and control the electronic device 1100, and code of the program executed by the processor 1110 may be stored in the memory 1120.

The communication interface 1130 may be provided to a user through a communicator (or a communication unit) that operates to allow the server and the simulation device to communicate. A short-range wireless communication unit may include, for example, a Bluetooth communication unit, a Bluetooth low energy (BLE) communication unit, a near-field communication (NFC) unit, a wireless LAN (WLAN) (e.g., Wi-Fi) communication unit, a Zigbee communication unit, an infrared data association (IrDA) communication unit, a Wi-Fi direct (WFD) communication unit, an ultra-wideband (UWB) communication unit, an Ant+ communication unit, or the like, but is not limited thereto.

A wireless communication unit may include, for example, a cellular network communication unit, an Internet communication unit, a computer network (e.g., LAN or WAN) communication unit, or the like, but is not limited thereto. The wireless communication unit may use subscriber information (e.g., an international mobile subscriber identifier (IMSI)) to identify and authenticate the electronic device 1100 within a communication network.

The embodiments described herein may be implemented using hardware components, software components and/or combinations thereof. A processing device may be implemented using one or more general-purpose or special purpose computers, such as, for example, a processor, a controller, an arithmetic logic unit (ALU), a digital signal processor, a microcomputer, a field programmable gate array (FPGA), a programmable logic unit (PLU), a microprocessor, or any other device capable of responding to and executing instructions in a defined manner. The processing device may run an operating system (OS) and one or more software applications that run on the OS. The processing device also may access, store, manipulate, process, and create data in response to execution of the software. For purpose of simplicity, the description of a processing device is used as singular; however, one skilled in the art will appreciated that a processing device may include multiple processing elements and multiple types of processing elements. For example, a processing device may include multiple processors or a processor and a controller. In addition, different processing configurations are possible, such as, parallel processors.

The software may include a computer program, a piece of code, an instruction, or some combination thereof, to independently or collectively instruct or configure the processing device to operate as desired. Software and/or data may be embodied permanently or temporarily in any type of machine, component, physical or virtual equipment, computer storage medium or device, or in a propagated signal wave capable of providing instructions or data to or being interpreted by the processing device. The software also may be distributed over network-coupled computer systems so that the software is stored and executed in a distributed fashion. The software and data may be stored by one or more non-transitory computer-readable recording mediums.

The methods according to the above-described examples may be recorded in non-transitory computer-readable media including program instructions to implement various operations of the above-described examples. The media may also include, alone or in combination with the program instructions, data files, data structures, and the like. The program instructions recorded on the media may be those specially designed and constructed for the purposes of examples, or they may be of the kind well-known and available to those having skill in the computer software arts. Examples of non-transitory computer-readable media include magnetic media such as hard disks, floppy disks, and magnetic tape; optical media such as CD-ROM discs, DVDs, and/or Blue-ray discs; magneto-optical media such as optical discs; and hardware devices that are specially configured to store and perform program instructions, such as read-only memory (ROM), random access memory (RAM), flash memory (e.g., USB flash drives, memory cards, memory sticks, etc.), and the like. Examples of program instructions include both machine code, such as produced by a compiler, and files containing higher-level code that may be executed by the computer using an interpreter. The above-described hardware devices may be configured to act as one or more software modules in order to perform the operations of the above-described examples, or vice versa.

While this disclosure includes specific examples, it will be apparent after an understanding of the disclosure of this application that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed in a different order, and/or if components in a described system, architecture, device, or circuit are combined in a different manner, and/or replaced or supplemented by other components or their equivalents.

Therefore, in addition to the above disclosure, the scope of the disclosure may also be defined by the claims and their equivalents, and all variations within the scope of the claims and their equivalents are to be construed as being included in the disclosure.

## Claims

**1.** A method of simulating a three-dimensional (3D) avatar, comprising:

obtaining image data comprising a first face mesh and an operator converting a first reference face mesh into a second reference face mesh;
generating a second conversion face mesh using the first face mesh, the first reference face mesh, and the operator;
generating a second face mesh using the second conversion face mesh and the second reference face mesh; and
applying the second face mesh to a 3D avatar.

**2.** The method of claim 1, wherein the second face mesh and the second reference face mesh are for simulating the 3D avatar.

**3.** The method of claim 1, wherein the operator comprises:
a function that enhances a first topology of the first face mesh to a second topology of the second face mesh, based on a mapping function that is based on barycentric coordinates of 3D positions of the first reference face mesh and 3D positions of the second reference face mesh.

**4.** The method of claim 1, wherein the generating of the second conversion face mesh comprises:
applying position differences between the first face mesh and the first reference face mesh to the operator.

**5.** The method of claim 1, further comprising:

generating, based on a first texture map of the first face mesh, a second texture map of the second face mesh; and
applying the second texture map to the 3D avatar.

**6.** The method of claim 5, wherein the generating of the second texture map comprises:

obtaining a first UV map of the first texture map;
calculating second UV coordinates based on barycentric coordinates of first UV coordinates of the first UV map;
generating a second UV map corresponding to the second face mesh based on the second UV coordinates; and
generating the second texture map based on the second UV map.

**7.** The method of claim 6, further comprising:

applying masking information of the image data to the 3D avatar based on the second UV map.

**8.** The method of claim 1, further comprising:
applying skin tone information in the image data to the 3D avatar.

**9.** The method of claim 1, wherein the applying to the 3D avatar comprises:
providing a 3D avatar customizing function to the 3D avatar applied with the second face mesh.

**10.** The method of claim 1, wherein the image data comprises:
a 3D face mesh and texture map extracted from at least one of a two-dimensional (2D) image, a 3D image, or a customized 3D image.

**11.** A device for simulating a three-dimensional (3D) avatar, comprising:

one or more processors; and
a memory storing instructions thereon, the instructions when executed by the one or more processors cause the one or more processors to:

obtain image data comprising a first face mesh;
obtain an operator converting a first reference face mesh into a second reference face mesh;
generate a second conversion face mesh using the first face mesh, the first reference face mesh, and the operator;
generate a second face mesh using the second conversion face mesh and the second reference face mesh; and
apply the second face mesh to a 3D avatar.

**12.** An electronic device, comprising:

a display configured to simulate a three-dimensional (3D) avatar;
a memory; and
a processor configured to:

obtain image data comprising a first face mesh;
obtain and an operator converting a first reference face mesh into a second reference face mesh;
generate a second conversion face mesh using the first face mesh, the first reference face mesh, and the operator;
generate a second face mesh using the second conversion face mesh and the second reference face mesh; and
apply the second face mesh to a 3D avatar.

**13.** A server, comprising:

a processor configured to:

generate using a first face mesh, a second conversion face mesh, a first reference face mesh, and an operator, in response to receiving a request for generation of a second face mesh being received from a simulation device; and
generate the second face mesh using the second conversion face mesh and a second reference face mesh;

a communicator configured to receive the request for the generation of the second face mesh, transmit the operator, and transmit the second face mesh generated by the processor; and
a memory,
wherein the operator is configured to convert image data comprising the first face mesh and the first reference face mesh into the second reference face mesh.

**14.** A simulation device, comprising:

a display configured to simulate a three-dimensional (3D) avatar;

a memory;
a communicator configured to receive image data comprising a first face mesh, transmit a request for generation of a second face mesh to a server, and receive the generated second face mesh, based on a user input; and
a processor configured to apply the second face mesh to the 3D avatar,
wherein the server is configured to:

in response to receiving the request for the generation of the second face mesh being received from the simulation device, generate a second conversion face mesh using the first face mesh, a first reference face mesh, and an operator;
generate the second face mesh using the second conversion face mesh and a second reference face mesh; and
transmit the second face mesh to the simulation device,

wherein the operator is configured to convert the image data comprising the first face mesh and the first reference face mesh into the second reference face mesh.

**15.** A non-transitory computer-readable storage medium storing instructions thereon, the instructions when executed by one or more processors cause the one or more processors to the method of claim 1.

Start
Obtain image data including first face mesh and operator converting first reference face mesh into second reference face mesh
101
Generate second conversion face mesh using first face mesh, first reference face mesh, and operator
102
Generate second face mesh using second conversion face mesh and second reference face mesh
103
Apply second face mesh to 3D avatar
104
End

FIG. 1A

Start
Obtain first UV map of first texture map
111
Calculate second UV coordinates based on barycentric coordinates of first UV coordinates of first UV map
112
Generate second UV map corresponding to second face mesh based on second UV coordinates
113
Generate second texture map based on second UV map
114
End

FIG. 1B

210
Image data
201
Mesh conversion
202
Texture map conversion
203
Converted face mesh
220
Application to avatar
Face converter
200

FIG. 2

311
312
201
203
220
2D image
3D face mesh & face texture map
Mesh conversion
Converted face mesh
Application to avatar
202
Texture map conversion
310
Face converter
300

FIG. 3

411
2D image
412
3D face mesh
& face
texture map
201
Mesh
conversion
202
Texture map
conversion
203
Converted
face mesh
220
Application
to avatar
Face converter
400

FIG. 4

510
3D face mesh
& face
texture map
201
Mesh conversion
202
Texture map
conversion
203
Converted
face mesh
220
Application
to avatar
Face converter
500

FIG. 5

Avatars
Avatar with custom face 621
620
Face mesh mapping (pre-computed)
External face meshes
Template face mesh 611
610


FIG. 6

701
Q
$B_Q$
710
Input image data
720
Face meshes (P) of 3D avatar
702
R
$B_R$

FIG. 7

800
Gender:
Age:
Ethnicity:
Any
Any
Any
Refresh Image

FIG. 8

900
911
912
921
922

FIG. 9

1010
1020
Skin tone update

FIG. 10

1100
1140
1120
Memory
1110
Processor
1130
Communication interface

FIG. 11

Europäisches
Patentamt
European
Patent Office
Office européen
des brevets

# EUROPEAN SEARCH REPORT

Application Number
EP 24 16 6438

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DANIEAU FABIEN ET AL: "Automatic Generation and Stylization of 3D Facial Rigs", 2019 IEEE CONFERENCE ON VIRTUAL REALITY AND 3D USER INTERFACES (VR), IEEE, 23 March 2019 (2019-03-23), pages 784-792, XP033597807, DOI: 10.1109/VR.2019.8798208 [retrieved on 2019-08-13] * abstract * * sections 3.5 - 3.7, 4, 4.1, 4.2 * * figures 6, 7, 15, 16,17, 18 * | 1-15 | INV. G06T13/40 G06T19/20 G06T15/04 |
| X | THIES JUSTUS ET AL: "Real-time expression transfer for facial reenactment", ACM TRANSACTIONS ON GRAPHICS, ACM, NY, US, vol. 34, no. 6, 26 October 2015 (2015-10-26), pages 1-14, XP059139426, ISSN: 0730-0301, DOI: 10.1145/2816795.2818056 * section 1, 2.2, 3, 4, 4.1, 5, 5.1 - 5.3, 6.1, 7, 7.1 - 7.3, 7.5, 8.3 * * figures 1, 15, 17 * | 1-5,8-15 | |

-/--

| TECHNICAL FIELDS SEARCHED (IPC) |
|---|
| G06T |

The present search report has been drawn up for all claims

2

| Place of search | Date of completion of the search | Examiner |
|---|---|---|
| Berlin | 7 August 2024 | Kröner, Sabine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

page 1 of 2

# EUROPEAN SEARCH REPORT

Application Number
EP 24 16 6438

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | THIBAUT WEISE ET AL: "Realtime performance-based facial animation", ACM TRANSACTIONS ON GRAPHICS, ACM, NY, US , vol. 30, no. 4 1 July 2011 (2011-07-01), pages 77-1, XP002728210, ISSN: 0730-0301, DOI: 10.1145/2010324.1964972 Retrieved from the Internet: URL:http://dl.acm.org/citation.cfm?id=1964972 [retrieved on 2014-08-06] * sections 1.2, 2, 4, 5 * * figures 2, 3, 4, 6, 9 * ----- | 1-4, 10-15 | |
| X | ROGER BLANCO I RIBERA ET AL: "Facial retargeting with automatic range of motion alignment", ACM TRANSACTIONS ON GRAPHICS, ACM, NY, US, vol. 36, no. 4, 20 July 2017 (2017-07-20), pages 1-12, XP058372928, ISSN: 0730-0301, DOI: 10.1145/3072959.3073674 * sections 3-5 * * figure 5 * ----- | 1,2,4, 9-15 | TECHNICAL FIELDS SEARCHED (IPC) |

The present search report has been drawn up for all claims

| Place of search | Date of completion of the search | Examiner |
|---|---|---|
| Berlin | 7 August 2024 | Kröner, Sabine |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

2

EPO FORM 1503 03.82 (P04C01)

page 2 of 2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230039976
- KR 1020230183473